# EUROPEAN PATENT APPLICATION

(11) **EP 1 467 324 A1**
(43) Date of publication of application: **13.10.2004**
(21) Application number: 03704709.9
(22) Date of filing: 10.01.2003
(51) Int. Cl.: G07D 7/12, G06K 7/10

(54) **DOCUMENT IDENTIFICATION SYSTEM**

(30) Priority: 14.01.2002 ES 200200064
(71) Applicant: Brake Plus, S.L., 28036 Madrid (ES)
(72) Inventor: LOBO ALEU, Jesus, E-48001 Bilboa (ES)
(74) Representative: Carvajal y Urquijo, Isabel
(86) International application number: PCT/ES2003/000009
(87) International publication number: WO 2003/058565

(57) **Abstract**

A system for recognizing documents, being of the type of systems used for recognizing documents provided with a security mark, which security mark is defined by a substance which is excitable when a light coming from the corresponding light source is emitted on it, comprising a light source defined by a modulated frequency diode laser (1) and at least two detector assemblies (3) for detecting the light emitted, by reflection or transmission, by the excitable substance of the security mark of the document to recognize, each detector assembly (3) being associated to a system for the electronic processing defined by a filter (7) and an amplifier (8), in turn connected to a single microprocessor.

## Description

As expressed in the title of the present specification, the following invention refers to a system for recognizing documents, being of utility for recognizing documents provided with a security mark, the mark being constituted of a substance which is excitable by a light radiation, such that the system for recognizing is defined by the corresponding light source and by at least one pair of detector assemblies for detecting the light emitted by the excitable substance of the security mark of the document to recognize, each detector assembly being associated to a system for the electronic filtering and processing of the signal, finally connected to a microprocessor.

Thus, the light source defined by a modulated frequency diode laser excites, at a certain wavelength, the substance of the security mark of the document to recognize, emitting light at different wavelengths, these being detected by the detector assemblies, with regard to determined points of the characteristic curve of the wave generated, so that once electronically processed, the microprocessor carries out the analysis and pertinent operations in order to be compared with the set of values stored in its memory for the purpose of determining whether the document is authentic or counterfeit.

The light emitter assembly is defined as the one constituted of a focused or collimated diode laser and a filter for eliminating the emissions outside of the wavelength characteristic of this type of lasers.

Each detector assembly is defined by a photodiode, a filter and a lens, said assembly being duly encapsulated.

On the other hand, the recognizing of the documents can be carried out either by reflection, such that the light emitted by the security mark of the document to recognize is detected by the detector assemblies on the laser light side of incidence, or by transmission, such that the light emitted by the laser passes through the document to recognize, exciting the security mark, this being detected by the detector assemblies on this second side.

Also, with the suitable output, it can operate such that the laser light passes through the document, excites the security mark, and the emission of this substance passes through the document, being read on the same laser light side of incidence.

### FIELD OF APPLICATION

The system for recognizing documents being presented is applicable for recognizing any type of documents provided with a security mark, having a special application for recognizing banknotes, allowing the base optical composition of the system for recognizing and the elements forming it to be integrated in an apparatus of small dimensions, with a minimum cost and complete reliability, making it useful and cost-effective in any type of businesses and establishments.

### BACKGROUND OF THE INVENTION

According to the apparatuses for recognizing documents existing on the market, a first separation can be in relation to the material application thereof, and thus reference can be made to those apparatuses for recognizing banknotes with an application in a multitude of establishments, and those apparatuses with a basic application in banking entities.

Thus, regarding those apparatuses for recognizing banknotes with an application in a multitude of establishments, the apparatuses based on an ultraviolet light radiation on the security mark, which causes the excitation of the mark., can be considered.

This system, which is provided with the advantage of not representing a high economic manufacturing cost, on the other hand has the drawback that it has no reliability, therefore banknotes may be recognized as valid when they really are not. This occurs because the excitation of the security mark occurs with the simple emission of ultraviolet light, this being a technique which is completely known and exceeded by counterfeiters. Furthermore, it cannot be considered a detector apparatus because it is the operator who decides if the banknote is authentic.

On the other hand, those apparatuses with a basic application in banking entities have on one hand the advantage of being very reliable, whereas on the other hand they have the drawback of being expensive, making them unfeasible for their use in business in general.

US patent 4,146,792 can thus be cited, which discloses a system for checking and authenticating security paper, such that light is also emitted on the excitable substance, although it has greater complexity and less optical efficiency, and a complex system of light collection and analysis constituted of a comparator which carries out a subtraction from the amplification of the signal detected by the photodiodes, comparing it with the established signal to verify the authenticity of the paper.

US patent US 4,598,205 can also be mentioned, which discloses a security paper with authenticity features in the form of luminescent substances only in the invisible optical spectrum area and a process for comparing it, such that once the luminescent substance is excited with invisible light, it exclusively emits invisible light of different waves as the authenticity signal.

To do this, the authenticity checking test apparatus comprises a light and a filter which allows a determined band of waves to pass towards a crystal placed at 45° to the incidence of the waves, which transmits 50% towards the document to authenticate, previously passing through a filter, such that the reflected waves pass through said crystal to a filter and to the detector.

Lastly, European patent 0513025 can be mentioned, which discloses a detection apparatus which can be used for checking a security mechanism or to analyze a sample containing a Raman active material, comprising a main monochromatic light source, preferably a He-Ne laser, means for directing the light source to the sample, means for separating the light source from the radiation emitted from the sample or scattered by it, means adapted for differentiating between the Raman-scattered light and the light of a neighboring wavelength; and one or more deflectors for the respective differentiated radiations.

### DESCRIPTION OF THE INVENTION

The present specification discloses a system for recognizing documents, being of the type of systems used for recognizing documents provided with a security mark, which security mark is defined by a substance which is excitable when a light which comes from the corresponding light source is emitted on it, such that the system comprises a light source defined by a modulated frequency diode laser assembly and at least two detector assemblies detecting the light reflected, by reflection or by transmission, by the excitable substance of the security mark of the document to recognize, each detector assembly being associated to a system for the electronic filtering and processing of the signal, and in turn, to a single microprocessor.

As the light source is defined by a diode laser of small dimensions and with focused light, all of its light output is in a narrow wavelength and in one point, i.e. since it is not an extensive light source of large dimensions and with scattered light, the filter for eliminating the unwanted radiations is of a very low cost, since it eliminates radiations of 1000 orders less of magnitude.

On the other hand, each detector assembly for detecting the light emitted, by reflection or by transmission, from the excitable substance of the security mark, is defined by a photodiode, a filter and a lens, duly encapsulated.

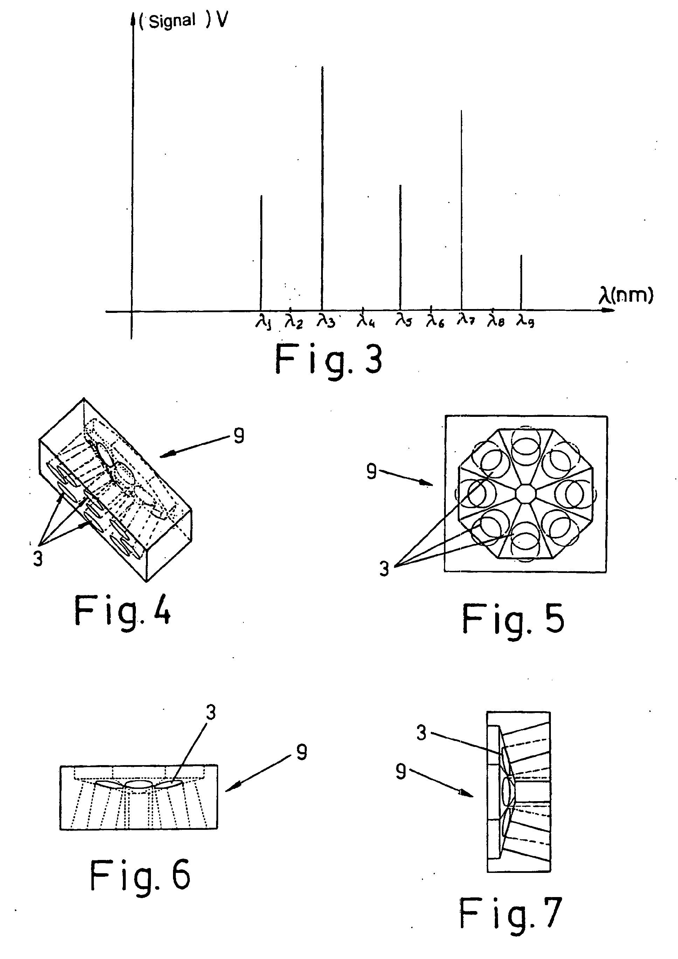

Furthermore, each detector assembly for detecting the light emitted, by reflection or by transmission, from the excitable substance of the security mark, is integrated in a body which groups all the detector assemblies for detecting the light emitted, such that all the detector assemblies are directed towards one point, as can be seen in figures 4, 5 and 6 of the drawings.

Thus, the light source defined by a modulated frequency diode laser assembly excites, at a determined wavelength, the substance of the security mark of the document to recognize, emitting light at different wavelengths and these being detected by the detector assemblies, regarding determined points of the characteristic curve of the wave generated, so that once they are electronically processed, the microprocessor performs the pertinent analysis and operations in order to be compared with the set of values stored in its memory, for the purpose of determining whether the document recognized is authentic or counterfeit.

The characteristic curve of the wave generated, shown in figure 3, is analyzed by the number of detector assemblies, being able to perform different comparison methodologies. Thus, the relative intensities of the emissions at different wavelengths λ₁, λ₃, λ₅..., can be analyzed, or with the definition of a threshold, the analysis of the existence or non-existence of emission at specific wavelengths λ₁, λ₂, λ₃...; in both cases, these wavelengths are the wavelengths determined for each one of the detector assemblies by the filters integrated in the detector assembly.

On the other hand, the system for recognizing documents incorporates a presence detector determining the placement of the security mark on the document to recognize, allowing to know the area it is recognizing and the position thereof on the document.

With the arrangement of the elements forming part of the system for recognizing documents, the detection path length is very short, obtaining better optical tolerance with the banknote path distance, and obtaining a small and low cost equipment.

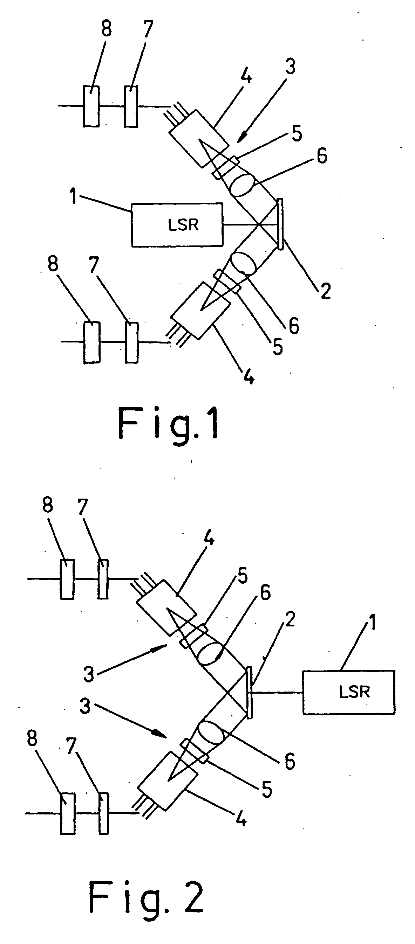

Thus, the optical composition disclosed allows the diode laser, as well as the detector assemblies for detecting the light reflected by the excitable substance of the security document, to be very close to the document, i.e. the optical path length is very small, thereby preventing the light emitted by the substance to scatter (as can be seen in figures 1 and 2).

To complement the description that will be made below, and for the purpose of aiding to better understand the features of the invention, a set of drawings is attached to the present specification whose figures, in an illustrative and non-limiting manner, show the most characteristic details of the invention.

### BRIEF DESCRIPTION OF THE DRAWINGS

Figure 1 shows a view of an optical composition of a system for recognizing documents, based on the detection by reflection of the light reflected by the excitable substance of the security mark of the document to recognize, and which comprises a pair of detector assemblies.
Figure 2 shows a view of an optical composition of a system for recognizing documents, based on the detection by transmission of the light reflected by the excitable substance of the security mark of the document to recognize, and which comprises a pair of detector assemblies.
Figure 3 shows a figure of a series of points at which the measurement of the wavelength is carried out, referring to the characteristic curve of the wave generated.
Figure 4 shows a perspective view of an element which groups detector assemblies for detecting the light reflected by the excitable substance of the security mark of the document to recognize, said element grouping, for example, eight detector assemblies, being possible to see how the detector assemblies are inclined so that they are all focused towards the point of reflection of the light.
Figure 5 shows a plan view of the element shown in the previous figure, which groups several detector assemblies for detecting the light reflected by the excitable substance of the security mark of the document to recognize.
Figure 6 shows a side elevational view of the element shown in the previous figure, which groups several detector assemblies for detecting the light reflected by the excitable substance of the security mark of the document to recognize, being possible to see how the detector assemblies are inclined so that they are all focused towards the point of reflection of the light.
Figure 7 shows a side elevational view of the element shown in figure 5, according to a 90° turn, of the previous figure, which groups several detector assemblies for detecting the light reflected by the excitable substance of the security mark of the document to recognize, being possible to see how the detector assemblies are inclined so that they are all focused towards the point of reflection of the light.

### DESCRIPTION OF A PREFERRED EMBODIMENT

In view of the figures discussed and according to the adopted numbering, it can be seen how the system for recognizing documents comprises a modulated frequency diode laser 1 whose light is emitted towards the document 2 to recognize, which is provided with a security mark defined by a substance excitable at a determined wavelength, light being emitted at different wavelengths, and which light is detected by at least two detector assemblies with regard to determined points of the characteristic curve of the wave generated.

On the other hand, as the light source is defined by a diode laser of small dimensions and with focused light, all of its light output is at a narrow wavelength and at one point, i.e. since it is not an extensive light source of large dimensions and with scattered light, the filter for eliminating the unwanted radiations is of a very low cost, since it eliminates radiations of 1000 orders less of magnitude.

Thus, with light bulbs or lamps used in other detection systems, the filter used must filter a lot of unwanted wavelength, therefore the effective output is very small compared to the real output of the lamp, not like in the laser in which the real output is 99% of the effective output. With all of this, an apparatus is obtained which has very low 3W consumptions, a video in stand-by being 5W.

The detector assemblies 3 are constituted of a photodiode 4, a filter 5 and a lens 6, such that the light emitted by the excitable substance of the security mark detected by the detector assemblies 3 is analogically processed by means of a filter 7 and an amplifier 8 and sent to a microprocessor incorporated by the system.

Thus, after the pertinent operations, the microprocessor calculates the difference of signal analyzed by the detector assemblies for being compared to the value stored in its memory, for the purpose of determining whether the document recognized is authentic or counterfeit, being able to see in figure 3 of the drawings a series of points at which the measurement of the wavelength is carried out, with reference to the characteristic curve of the wave generated.

Thus, the system can incorporate a variable number of detector assemblies 3, incorporating at least two detector assemblies.

An important advantage of the system is that the components of the optical composition have a low cost and they can be integrated in an apparatus of very small dimensions, allowing its application in any type of establishments, at the same time being completely reliable.

All this is a consequence of the fact that the optical path length traveled by the light emitted by the diode laser 1 and the light reflected by the excitable substance of the security mark is very small.

In other words, due to the arrangement of the elements, the small path length of the light emitted by the substance which is the light being read, and because all of the laser's output is focused at one very small point, a high optical yield is obtained, allowing a very clear detection of the substance and, with that, allowing the use of a conventional detector which the filter is added to, but without using very high sensitivity detectors, such as the very delicate photomultipliers on the other hand, and with very short lifetimes. Furthermore, since the components used are not at all delicate, a very high average lifetime is obtained, and with the added fact that it requires no maintenance whatsoever.

Furthermore, the system can act by reflection, such that the light emitted by the excitable substance of the document to recognize is on the same side as the excitation laser light, or with the suitable output, both pass through the banknote, and are detected by the detector assemblies arranged next to the laser excitation light, or the system can act by transmission, such that the light emitted by the diode laser passes through the document and excites the excitable substance of the document to recognize, being analyzed on this second side.

The different detector assemblies are integrated in a body 9, all of them being directed towards a point of the path of the document 2 to recognize, as can be seen in the attached drawings.

On the other hand, the apparatus integrating the system for recognizing documents incorporates a presence detector which allows knowing the position of the security mark on the document, which collaborates in the reliability of the system.

## Claims

1. A system for recognizing documents, being of the type of systems used for recognizing documents provided with a security mark, which security mark is defined by a substance which is excitable when a light coming from the corresponding light source is emitted on it, **characterized in that** the system comprises a light source defined by a modulated frequency diode laser (1) and at least two detector assemblies (3) for detecting the light emitted, by reflection or transmission, by the excitable substance of the security mark of the document to recognize, each detector assembly (3) being associated to a system for electronic processing defined by a filter (7) and an amplifier (8), in turn connected to a single microprocessor.

2. A system for recognizing documents according to claim 1, **characterized in that** since the light source is defined by a diode laser (1) of small dimensions and with focused light, all of the light output is at a narrow wavelength and at one point.

3. A system for recognizing documents according to claim 1, **characterized in that** each detector assembly (3) for detecting the light emitted, by reflection or transmission, from the excitable substance of the security mark, is defined by a photodiode (4), a filter (5) and a lens (6), duly encapsulated.

4. A system for recognizing documents according to claims 1 and 3, **characterized in that** each detector assembly (3) for detecting the light emitted, by reflection or transmission, from the excitable substance of the security mark, is integrated in a body (9) which groups all the detector assemblies (3) for detecting the light reflected, which detector assemblies are directed towards a common point.

5. A system for recognizing documents according to claim 1, **characterized in that** with the arrangement of the elements forming part of the system for recognizing, the detection path length is very short, obtaining a better optical tolerance with the banknote pass distance, and obtaining a small-sized and low cost equipment.

6. A system for recognizing documents according to claim 1, **characterized in that** the system for recognizing incorporates a presence detector determining the placement of the security mark on the document to recognize.

7. A system for recognizing documents according to claim 1, **characterized in that** the light source can be defined by any light source with its corresponding filter, achieving the necessary monochromatic character.
